# EUROPEAN PATENT SPECIFICATION

(11) **EP 2 894 653 B1**
(45) Date of publication and mention of the grant of the patent: **26.04.2017**
(21) Application number: 12884313.3
(22) Date of filing: 05.09.2012
(51) Int. Cl.: H01H 33/59

(54) **DC BREAKER**
GLEICHSTROM-SCHUTZSCHALTER
DISJONCTEUR DE COURANT CONTINU

(43) Date of publication of application: 15.07.2015
(73) Proprietor: Mitsubishi Electric Corporation, Tokyo 100-8310 (JP)
(72) Inventor: TAKEDA, Toshinobu, Tokyo 100-8310 (JP); KIKUCHI, Kunio, Tokyo 100-8310 (JP); MIYASHITA, Makoto, Tokyo 100-8310 (JP); KAMEI, Kenji, Tokyo 100-8310 (JP); HORINOUCHI, Yusaku, Tokyo 103-0027 (JP); HIRATSUKA, Masaki, Tokyo 100-8310 (JP); TOKOYODA, Sho, Tokyo 100-8310 (JP); TAHATA, Kazuyori, Tokyo 100-8310 (JP)
(74) Representative: Zech, Stefan Markus
(86) International application number: PCT/JP2012/072596
(87) International publication number: WO 2014/038008

(56) References cited:
- JP-A- H0 589 753
- JP-A- H0 896 675
- JP-A- H0 917 294
- JP-A- H09 231 877
- JP-A- H11 111 123
- JP-A- S60 167 221
- JP-A- S60 167 222
- JP-A- S61 171 019
- JP-A- 2002 208 334
- US-A- 3 657 607

## Description

### Field

The present invention relates to a direct-current circuit breaker that blocks a high-voltage high DC current flowing through a DC line at a high speed.

### Background

In direct-current circuit breakers that block a DC current flowing through a DC line, a DC current does not have a current-zero point in contrast to an AC current, and therefore a resonant current from a commutation circuit constituted by a capacitor and a reactor is superimposed on the DC current to form a current-zero point, and at the current-zero point, the DC current is blocked. Such methods of forming a current-zero point include a forced commutation method, a self-commutation method, and the like. In the forced commutation method, a commutation circuit constituted by a capacitor and a reactor is connected to a blocking unit in parallel, the capacitor charged in advance discharges its electrical charge; therefore, an oscillating current is generated because of the resonance between the capacitor and the reactor and is superimposed on a DC current, thereby forming a current-zero point. In the self-commutation method, a resonant circuit constituted by a capacitor and a reactor is connected to a blocking unit in parallel, and the current oscillation is increased by the interaction between the resonant circuit and negative arc characteristics, thereby forming a current-zero point.

In recent years, it is considered desirable that a direct-current circuit breaker used in a high-voltage direct current (HVDC) grid cuts off a fault line within several milliseconds from the occurrence of a fault. A technique for a direct-current circuit breaker that blocks a DC current at a high speed has been disclosed in which, for example, a semiconductor blocking unit is configured by connecting two thyristors in anti-parallel with each other, and the forced commutation method is used to form a current-zero point in order to block the current (for example, Patent Literature 1). In the field of HVDC described above, development of a semiconductor blocking unit that is capable of blocking a high-voltage high DC current, a hybrid direct-current circuit breaker in which a semiconductor device and a high-speed disconnector are combined, and other devices is advancing. "JP S60 167221 A" discloses a direct-current circuit breaker that blocks a DC current flowing through a DC line, the direct-current circuit breaker comprising: a circuit that is configured by connecting three series circuits with each other, each of the series circuits being configured from a reactor (L) and a commutation unit that includes a capacitor (C); a first blocking unit (CB1), a second blocking unit (CB2) and a third blocking unit (CB3).

### Citation List

### Patent Literature

Patent Literature 1: Japanese Patent Application Laid-open No. H9-17294

### Summary

### Technical Problem

However, in the self-commutation method described above, a current-zero point cannot be formed until the current oscillation is increased by the interaction between the resonant circuit and negative arc characteristics. Therefore, there is a problem in that a considerable amount of time is required to completely cut off a fault point from the occurrence of a fault. In addition, in the forced commutation method described above, in order to charge the capacitor in the commutation circuit, a separate charging circuit that includes an AC power supply and a rectifier is required. Therefore, there is a problem in that the size and the cost of the direct-current circuit breaker are increased.

The present invention has been achieved in view of the above and an object of the present invention is to provide a direct-current circuit breaker that is capable of cutting off a fault point at a higher speed and that can achieve downsizing and cost reduction.

### Solution to Problem

In order to solve the above problems and achieve the object, the direct-current circuit breaker related to the present invention is a direct-current circuit breaker according to claims 1, 8 and 11.

### Advantageous Effects of Invention

According to the present invention, an effect is obtained where the direct-current circuit breaker is capable of cutting off a fault point at a higher speed and can achieve downsizing and cost reduction.

### Brief Description of Drawings

FIG. 1 is a diagram showing a configuration example of a direct-current circuit breaker according to a first embodiment.
FIG. 2 is a diagram showing current paths before and after the occurrence of a fault in a DC line on which the direct-current circuit breaker according to the first embodiment is inserted.
FIG. 3 is a diagram showing current waveforms in the direct-current circuit breaker according to the first embodiment when a fault current is not blocked by a first blocking unit.
FIG. 4 is a diagram showing current waveforms in the direct-current circuit breaker according to the first embodiment when a fault current is blocked by the first blocking unit.
FIG. 5 is a diagram showing an example of a DC-current block-control timing when a fault occurs in the DC line on which the direct-current circuit breaker according to the first embodiment is inserted.
FIG. 6 is a diagram showing a configuration example of a direct-current circuit breaker according to a second embodiment.
FIG. 7 is a diagram showing current waveforms in the direct-current circuit breaker according to the second embodiment when a fault current is not blocked by a first blocking unit.
FIG. 8 is a diagram showing current waveforms in the direct-current circuit breaker according to the second embodiment when a fault current is blocked by the first blocking unit.
FIG. 9 is a diagram showing a configuration example of a direct-current circuit breaker according to a third embodiment.
FIG. 10 is a diagram showing current waveforms in the direct-current circuit breaker according to the third embodiment when a fault current is not blocked by a first blocking unit.
FIG. 11 is a diagram showing current waveforms in the direct-current circuit breaker according to the third embodiment when a fault current is blocked by the first blocking unit.
FIG. 12 is a diagram showing a configuration example of a direct-current circuit breaker according to a fourth embodiment.
FIG. 13 is a diagram showing current waveforms in the direct-current circuit breaker according to the fourth embodiment when a fault current is not blocked by a first blocking unit.
FIG. 14 is a diagram showing current waveforms in the direct-current circuit breaker according to the fourth embodiment when a fault current is blocked by the first blocking unit.
FIG. 15 is a diagram showing a configuration example of a direct-current circuit breaker according to a fifth embodiment.
FIG. 16 is a diagram showing a configuration example of a direct-current circuit breaker according to a sixth embodiment.
FIG. 17 is a diagram showing current waveforms in the direct-current circuit breaker according to the sixth embodiment when a fault current is not blocked by a first blocking unit.
FIG. 18 is a diagram showing current waveforms in the direct-current circuit breaker according to the sixth embodiment when a fault current is blocked by the first blocking unit.
FIG. 19 is a diagram showing a configuration example of a direct-current circuit breaker according to a seventh embodiment.
FIG. 20 is a diagram showing current waveforms in the direct-current circuit breaker according to the seventh embodiment when a fault current is not blocked by a blocking unit.
FIG. 21 is a diagram showing current waveforms in the direct-current circuit breaker according to the seventh embodiment when a fault current is blocked by the blocking unit.

### Description of Embodiments

Direct-current circuit breakers according to exemplary embodiments of the present invention will be explained below in detail with reference to the accompanying drawings. The present invention is not limited to the embodiments.

### First embodiment.

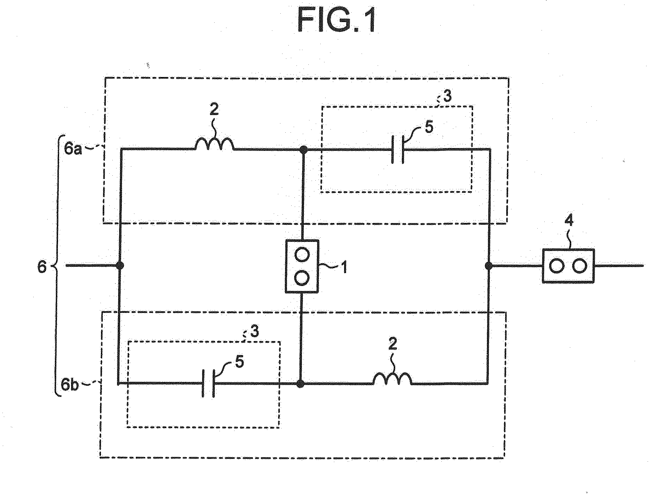

FIG. 1 is a diagram showing a configuration example of a direct-current circuit breaker according to a first embodiment. As shown in FIG. 1, the direct-current circuit breaker according to the first embodiment includes a bridge circuit 6 that is configured by connecting two series circuits 6a and 6b in anti-parallel with each other, each of which is configured from a reactor 2 and a commutation unit 3 that includes a capacitor 5, a first blocking unit 1 that is connected between connection points, each of which is between the reactor 2 and the commutation unit 3 in each of the series circuits, and a second blocking unit 4 that is connected to the bridge circuit 6 in series.

Next, an explanation will be given of an operation of the direct-current circuit breaker according to the first embodiment when a fault occurs in a DC line, on which the direct-current circuit breaker is inserted, with reference to FIGS. 1 to 5.

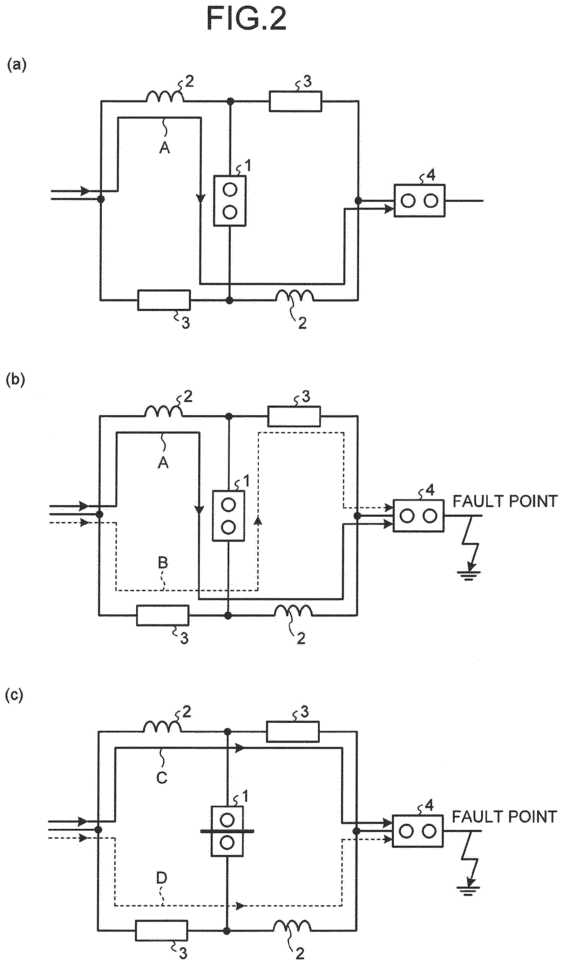

FIG. 2 is a diagram showing current paths before and after the occurrence of a fault in a DC line on which the direct-current circuit breaker according to the first embodiment is inserted. FIG. 2(a) shows a current path at a normal time when a steady-state current flows through the DC line. FIG. 2(b) shows a current path when a ground fault has occurred at a fault point shown in FIG. 2(b). FIG. 2(c) shows a current path after a fault current is blocked by the first blocking unit 1.

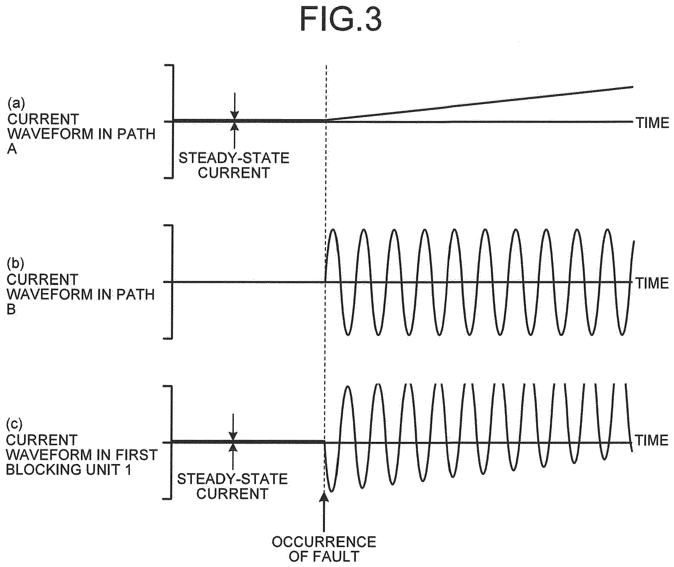

FIG. 3 is a diagram showing current waveforms in the direct-current circuit breaker according to the first embodiment when a fault current is not blocked by the first blocking unit. FIG. 3(a) shows a waveform of a current flowing through a path A shown in FIG. 2. FIG. 3(b) shows a waveform of a current flowing through a path B shown in FIG. 2. FIG. 3(c) shows a waveform of a current flowing through the first blocking unit 1.

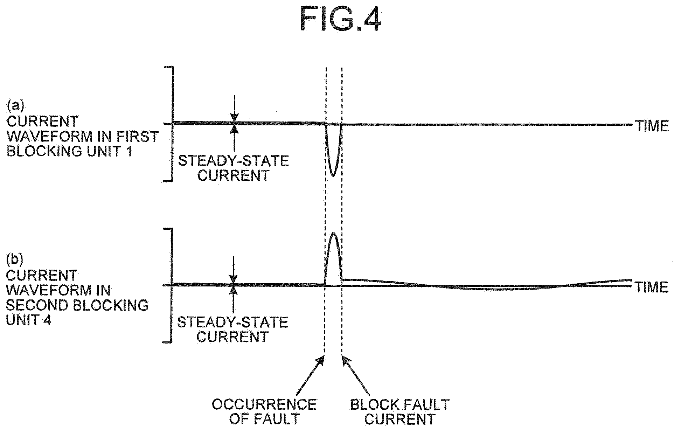

FIG. 4 is a diagram showing current waveforms in the direct-current circuit breaker according to the first embodiment when a fault current is blocked by the first blocking unit. FIG. 4(a) shows a waveform of a current flowing through the first blocking unit 1. FIG. 4(b) shows a waveform of a current flowing through the second blocking unit 4.

As shown in FIG. 2(a), at the normal time when a steady-state current flows through a DC line, the first blocking unit 1 and the second blocking unit 4 are in a closed state, and a steady-state current flows through the path A shown by a solid arrow. This steady-state current is a DC current and therefore does not flow through the capacitors 5. Accordingly, the commutation units 3 are in an insulated state.

For example, when a ground fault occurs at a fault point shown in FIG. 2(b), an oscillating current as shown in FIG. 3(b) flows through the path B shown by a dotted arrow according to the capacitance value of the capacitors 5, the wire resistance, and the inductance. In contrast, the current flowing through the path A gradually increases according to the inductance value of the reactors 2 as shown in FIG. 3(a).

At this point, as shown in FIG. 2(b), the current flowing through the path A (that is, the current flowing through the reactors 2 via the first blocking unit 1) and the current flowing through the path B (that is, the current flowing through the commutation units 3 via the first blocking unit 1) flow into the first blocking unit 1. Therefore, a plurality of current-zero points are generated, at which these currents cancel each other out. Accordingly, by disconnecting the first blocking unit 1 at any of these current-zero points, a fault current can be blocked.

In the example shown in FIG. 4, the first blocking unit 1 is disconnected at a current-zero point in a half-cycle of the oscillating current generated by the commutation units 3 (see FIG. 4(a)). Therefore, residual currents flow respectively through a path C (the series circuit 6a) and a path D (the series circuit 6b) (both shown in FIG. 2(c)), and then these additional currents flow into the second blocking unit 4. The additional currents become an oscillating current according to the inductance value of the reactors 2 and the capacitance value of the capacitors 5. Therefore, a plurality of current-zero points are generated, at which the residual current flowing through the path C and the residual current flowing through the path D cancel each other out (see FIG. 4(b)). Accordingly, by disconnecting the second blocking unit 4 at any of these current-zero points, the fault point is completely cut off.

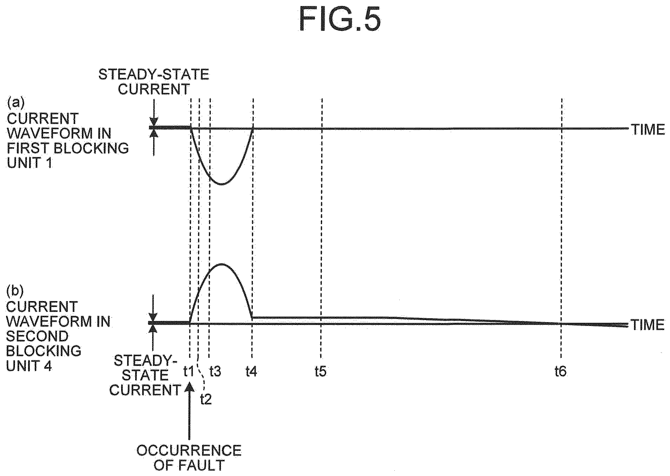

Next, an explanation will be given of a DC-current block-control timing when a fault occurs in the direct-current circuit breaker according to the first embodiment with reference to FIG. 2 and 5. FIG. 5 is a diagram showing an example of the DC-current block-control timing when a fault occurs in a DC line on which the direct-current circuit breaker according to the first embodiment is inserted.

In the example shown in FIG. 5, as illustrated by the solid arrow in FIG. 2(a), a steady-state current flows from the left-end side toward the right-end side of the direct-current circuit breaker at a normal time when the steady-state current flows through a DC line. In the example shown in FIG. 5, the first blocking unit 1 is disconnected at a current-zero point in a half-cycle of the oscillating current generated by the commutation units 3, similarly to the example shown in FIG. 4.

As shown in FIG. 5, when a fault (for example, a ground fault on the right-end side of the direct-current circuit breaker shown in FIG. 2(b)) occurs at time t1, as described above, the current flowing through the path A and the current flowing through the path B flow into the first blocking unit 1. Therefore, a plurality of current-zero points are generated, at which these currents cancel each other out (see FIG. 2(b)).

When a control circuit (not shown) detects a fault at time t2, an opening control signal is output to the first blocking unit 1 at time t3, and then a fault current is blocked at the zero point of the current flowing through the first blocking unit 1 (at time t4).

At time t5 after the first blocking unit 1 is disconnected, an opening control signal is output to the second blocking unit 4, and then a residual current is blocked at the zero point of the current flowing through the second blocking unit 4 to completely cut off the fault point (at time t6).

In the configuration according to the present embodiment, when a fault occurs, an oscillating current is generated according to the capacitance value of the capacitors 5 in the commutation units 3, the wire resistance, and the inductance. This oscillating current is superimposed on the current flowing through the first blocking unit 1 that is responsible for blocking a fault current, so as to form a current-zero point in the first blocking unit 1. With this configuration, it is possible to form a current-zero point faster than the conventional self-commutation method of forming a current-zero point by increasing the current oscillation by the interaction between the resonant circuit and negative arc characteristics obtained after an operation of a blocking unit. Therefore, the present embodiment is suitable for a configuration, for example, in which a semiconductor blocking unit that is formed by using a semiconductor device such as an IGBT or a thyristor and is capable of operating at a high speed is used as the first blocking unit 1.

As described above, it is considered desirable that a direct-current circuit breaker used in a high-voltage direct current (HVDC) grid cuts off a fault line within several milliseconds (for example, within 5 milliseconds) from the occurrence of a fault. Assuming that a mechanical circuit breaker such as a general vacuum circuit breaker is configured as the direct-current circuit breaker used in the HVDC grid as described above, its operating time is long (for example, 30 milliseconds); therefore, development of a semiconductor blocking unit that is capable of blocking a high-voltage high DC current, a hybrid direct-current circuit breaker in which a semiconductor device and a high-speed disconnector are combined, and other devices is advancing.

It is also preferable to apply the configuration according to the present embodiment to a direct-current circuit breaker used in an HVDC grid as described above. For example, in the HVDC grid, in order to cut off a fault line within 5 milliseconds from the occurrence of a fault, it suffices that the semiconductor blocking unit that is capable of blocking a high-voltage high DC current or the hybrid direct-current circuit breaker, as described above, is applied to the first blocking unit 1 or applied to both the first blocking unit 1 and the second blocking unit 4, and then the inductance value of the reactors 2 and the capacitance value of the capacitors 5 are set at such values as to disconnect the second blocking unit 4 in 5 milliseconds or less from the occurrence of a fault.

In the configuration according to the present embodiment, it is not necessary to provide a charging circuit that charges a capacitor used for generating an oscillating current to be superimposed in a blocking unit in contrast to the conventional forced commutation method. Therefore, the direct-current circuit breaker can be downsized and configured at a low cost.

Further, in the configuration according to the present embodiment, in order to reduce the period of time from the occurrence of a fault to formation of a current-zero point, it suffices that the inductance value of the reactors 2 and the capacitance value of the capacitors 5 are reduced. This makes it easier to downsize the direct-current circuit breaker than the conventional self-commutation method.

As explained above, the direct-current circuit breaker according to the first embodiment includes a bridge circuit that is configured by connecting two series circuits in anti-parallel with each other, each of which is configured from a reactor and a commutation unit that includes a capacitor, a first blocking unit that is connected between connection points, each of which is between the reactor and the commutation unit in each of the series circuits, and a second blocking unit that is connected to the bridge circuit in series. An oscillating current generated in the commutation units when a fault occurs is superimposed on a current flowing through the first blocking unit and the first blocking unit is disconnected to block a fault current at a current-zero point at which a current flowing through the reactors via the first blocking unit and a current flowing through the commutation units via the first blocking unit cancel each other out. After the first blocking unit is disconnected, the second blocking unit is disconnected to cut off the fault point at a current-zero point at which currents flowing respectively through the series circuits cancel each other out. Therefore, by using a semiconductor blocking unit that is formed by using a semiconductor device and is capable of operating at a high speed as the first blocking unit or as both the first blocking unit and the second blocking unit, the direct-current circuit breaker can achieve downsizing and cost reduction as compared to the conventional self-commutation method and forced commutation method, while being capable of cutting off a fault point at a higher speed than the conventional self-commutation method.

The first embodiment described above has shown an example in which the first blocking unit is disconnected at a current-zero point in a half-cycle of the oscillating current generated by the commutation units. However, it is obvious that the current-zero point at which the first blocking unit is disconnected is not limited thereto, and the first blocking unit can be disconnected at a current-zero point according to the operating time of the first blocking unit.

### Second embodiment.

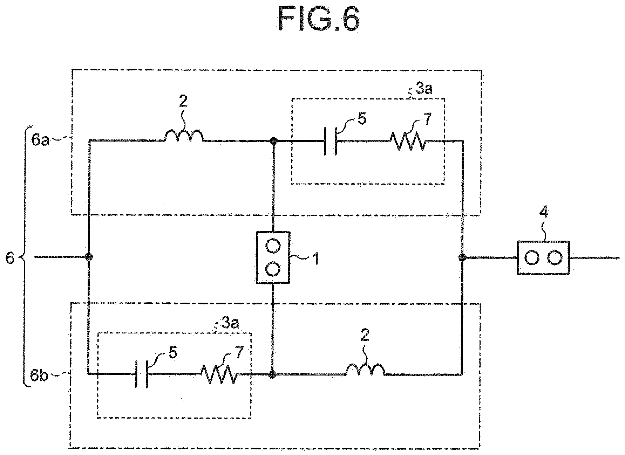

FIG. 6 is a diagram showing a configuration example of a direct-current circuit breaker according to a second embodiment. Components identical or equivalent to those according to the first embodiment are designated by like reference signs and detailed explanations thereof will be omitted. Current paths of the direct-current circuit breaker according to the second embodiment before and after a DC current is blocked when a fault occurs are the same as those in the first embodiment. Therefore, explanations of the current paths will be omitted.

In the present embodiment, as shown in FIG. 6, commutation units 3a each configured by connecting the capacitor 5 and a resistor 7 in series are included instead of the commutation units 3 explained in the first embodiment.

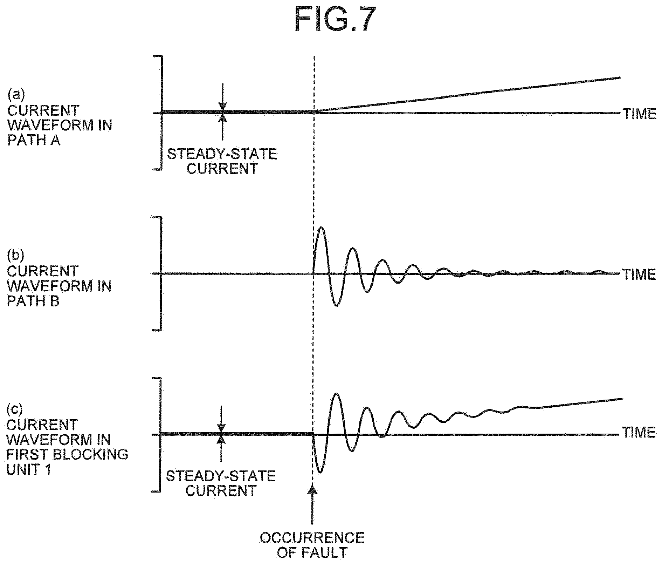

FIG. 7 is a diagram showing current waveforms in the direct-current circuit breaker according to the second embodiment when a fault current is not blocked by the first blocking unit. FIG. 7(a) shows a waveform of a current flowing through the path A shown in FIG. 2. FIG. 7(b) shows a waveform of a current flowing through the path B shown in FIG. 2. FIG. 7(c) shows a waveform of a current flowing through the first blocking unit 1.

In the case where the commutation units 3 are each configured only from the capacitor 5 as shown in the configuration in FIG. 1 in the first embodiment, the oscillating current flowing through the path B after the occurrence of a fault (that is, the current flowing through the commutation units 3a via the first blocking unit 1) is attenuated by a smaller amount, and the peak value of the oscillating current is maintained at a high level as shown in FIG. 3(b). When the peak value of the oscillating current is high, an overcurrent flows into a blocking unit from when an opening control signal is output to the blocking unit to when the oscillating current reaches a current-zero point. This makes it difficult to block the current.

In the present embodiment, the commutation units 3a are each configured by connecting the resistor 7 to the capacitor 5 in series. Therefore, the oscillating current flowing through the commutation units 3a via the first blocking unit 1 after the occurrence of a fault can be attenuated by a larger amount as shown in FIG. 7(b). In the present embodiment, the first blocking unit 1 is disconnected at any of a plurality of current-zero points generated within a period of time during which the peak value of the oscillating current, flowing through the path B after the occurrence of a fault, is larger than the current value flowing through the path A. Therefore, a fault current can be blocked.

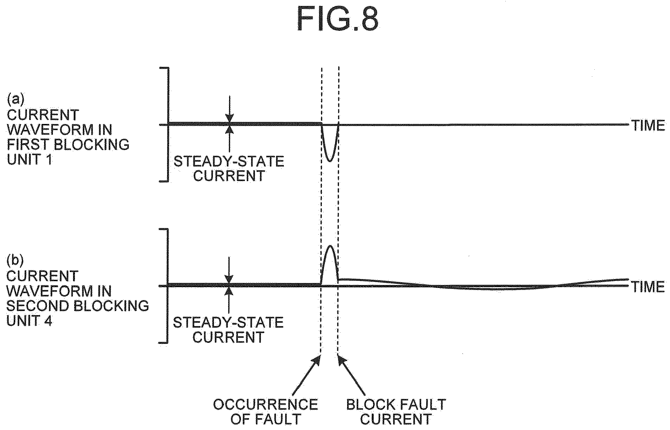

FIG. 8 is a diagram showing current waveforms in the direct-current circuit breaker according to the second embodiment when a fault current is blocked by the first blocking unit. FIG. 8(a) shows a waveform of a current flowing through the first blocking unit 1. FIG. 8(b) shows a waveform of a current flowing through the second blocking unit 4. In FIG. 8, the oscillating current flowing through the path B after the occurrence of a fault shows a smaller peak value and is attenuated by a larger amount than those shown in FIG. 4 explained in the first embodiment.

In the example shown in FIG. 8, similarly to FIG. 4 explained in the first embodiment, the first blocking unit 1 is disconnected at a current-zero point in a half-cycle of the oscillating current generated by the commutation units 3a (see FIG. 8(a)). Therefore, residual currents flow respectively through the path C (the series circuit 6a) and the path D (the series circuit 6b) (both shown in FIG. 2(c)), and then these additional currents flow into the second blocking unit 4. The additional currents become an oscillating current according to the inductance value of the reactors 2, the capacitance value of the capacitors 5, and the resistance value of the resistors 7. Therefore, similarly to the first embodiment, a plurality of current-zero points are generated, at which the residual current flowing through the path C and the residual current flowing through the path D cancel each other out (see FIG. 8(b)). Accordingly, by disconnecting the second blocking unit 4 at any of these current-zero points, the fault point is completely cut off.

As explained above, in the direct-current circuit breaker according to the second embodiment, the commutation units are each configured by connecting the resistor to the capacitor in series, and therefore the oscillating current flowing through the commutation units via the first blocking unit after the occurrence of a fault can be attenuated by a larger amount. This makes it easier for the first blocking unit to block the current. In the present embodiment, similarly to the first embodiment, by using a semiconductor blocking unit that is formed by using a semiconductor device and is capable of operating at a high speed as the first blocking unit or as both the first blocking unit and the second blocking unit, the direct-current circuit breaker can achieve downsizing and cost reduction as compared to the conventional self-commutation method and forced commutation method, while being capable of cutting off a fault point at a higher speed than the conventional self-commutation method.

Similarly to the first embodiment, the second embodiment described above has shown an example in which the first blocking unit is disconnected at a current-zero point in a half-cycle of the oscillating current generated by the commutation units. However, it is obvious that the current-zero point at which the first blocking unit is disconnected is not limited thereto and the first blocking unit can be disconnected at a current-zero point according to the operating time of the first blocking unit.

### Third embodiment.

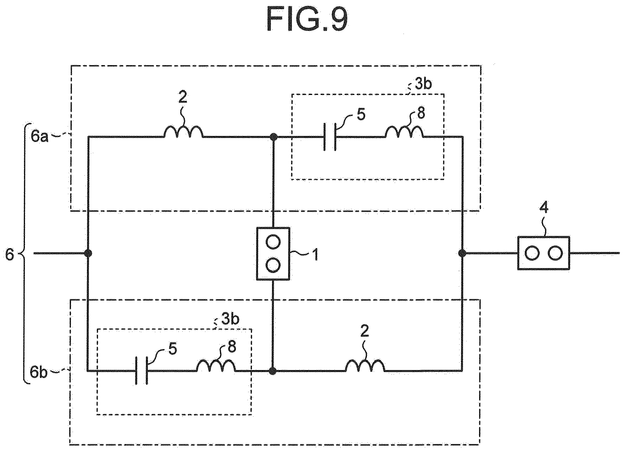

FIG. 9 is a diagram showing a configuration example of a direct-current circuit breaker according to a third embodiment. Components identical or equivalent to those according to the first embodiment are designated by like reference signs and detailed explanations thereof will be omitted. Current paths of the direct-current circuit breaker according to the third embodiment before and after a DC current is blocked when a fault occurs are the same as those in the first embodiment. Therefore, explanations of the current paths will be omitted.

In the present embodiment, as shown in FIG. 9, commutation units 3b each configured by connecting the capacitor 5 and a commutation reactor 8 in series are included instead of the commutation units 3 explained in the first embodiment.

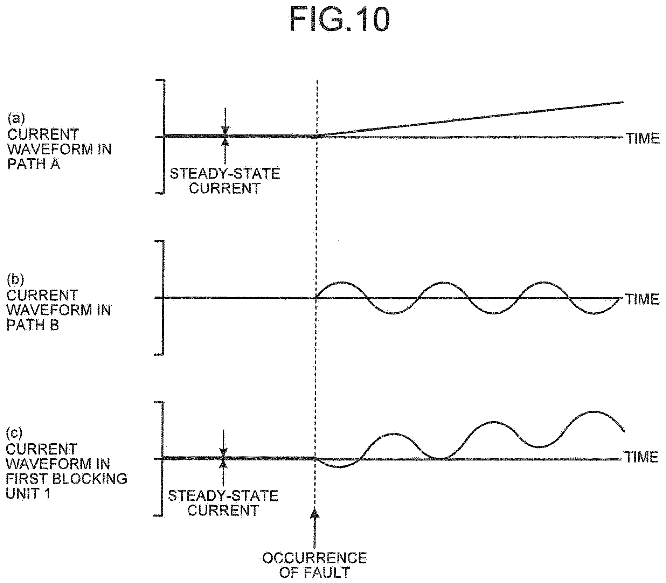

FIG. 10 is a diagram showing current waveforms in the direct-current circuit breaker according to the third embodiment when a fault current is not blocked by a first blocking unit. FIG. 10(a) shows a waveform of a current flowing through the path A shown in FIG. 2. FIG. 10(b) shows a waveform of a current flowing through the path B shown in FIG. 2. FIG. 10(c) shows a waveform of a current flowing through the first blocking unit 1.

In the case where the commutation units 3 are each configured only from the capacitor 5 as shown in the configuration in FIG. 1 in the first embodiment, the oscillating current flowing through the path B after the occurrence of a fault (that is, the current flowing through the commutation units 3b via the first blocking unit 1) is attenuated by a smaller amount, and the peak value of the oscillating current is maintained at a high level as explained in the second embodiment. In addition to this, a current gradient di/dt at a current-zero point is increased. This increased current gradient di/dt at a current-zero point is one of the factors that make it difficult to block the current.

In the present embodiment, the commutation units 3b are each configured by connecting the commutation reactor 8 to the capacitor 5 in series. Therefore, the oscillating current flowing through the commutation units 3b via the first blocking unit 1 after the occurrence of a fault can be attenuated by a larger amount, and also the frequency of this oscillating current can be reduced. Accordingly, the current gradient di/dt at a current-zero point can be reduced. In the present embodiment, the first blocking unit 1 is disconnected at any of a plurality of current-zero points generated within a period of time during which the peak value of the oscillating current flowing through the path B after the occurrence of a fault is larger than the current value flowing through the path A. Therefore, a fault current can be blocked.

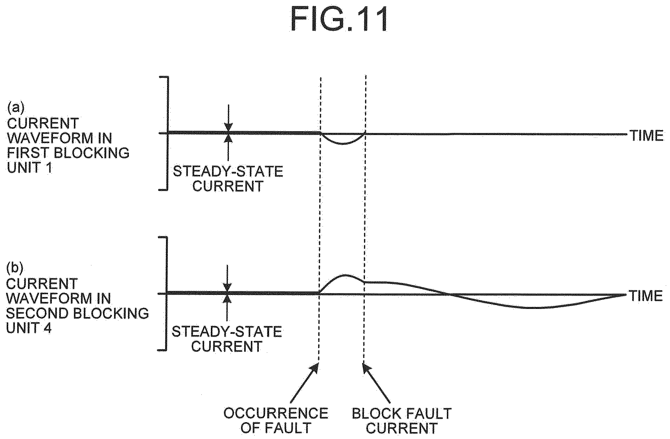

FIG. 11 is a diagram showing current waveforms in the direct-current circuit breaker according to the third embodiment when a fault current is blocked by the first blocking unit. FIG. 11(a) shows a waveform of a current flowing through the first blocking unit 1. FIG. 11(b) shows a waveform of a current flowing through the second blocking unit 4. In FIG. 11, the oscillating current flowing through the path B after the occurrence of a fault shows a smaller peak value and is attenuated by a larger amount than those shown in FIG. 4 explained in the first embodiment. Also, the frequency of the oscillating current is reduced, and therefore the current gradient di/dt at a current-zero point is reduced.

In the example shown in FIG. 11, similarly to FIG. 4 explained in the first embodiment, the first blocking unit 1 is disconnected at a current-zero point in a half-cycle of the oscillating current generated by the commutation units 3b (see FIG. 11(a)). Therefore, residual currents flow respectively through the path C (the series circuit 6a) and the path D (the series circuit 6b) (both shown in FIG. 2(c)), and then these additional currents flow into the second blocking unit 4. The additional currents become an oscillating current according to the inductance value of the reactors 2, the capacitance value of the capacitors 5, and the inductance value of the commutation reactors 8. Therefore, similarly to the first embodiment, a plurality of current-zero points are generated, at which the residual current flowing through the path C and the residual current flowing through the path D cancel each other out (see FIG. 11(b)). Accordingly, by disconnecting the second blocking unit 4 at any of these current-zero points, the fault point is completely cut off.

As explained above, in the direct-current circuit breaker according to the third embodiment, the commutation units are each configured by connecting the commutation reactor to the capacitor in series. Therefore, the oscillating current flowing through the commutation units via the first blocking unit after the occurrence of a fault can be attenuated by a larger amount, and also the current gradient di/dt at a current-zero point can be reduced. This makes it even easier for the first blocking unit to block the current than the second embodiment. In the present embodiment, similarly to the first and second embodiments, by using a semiconductor blocking unit that is formed by using a semiconductor device and is capable of operating at a high speed as the first blocking unit or as both the first blocking unit and the second blocking unit, the direct-current circuit breaker can achieve downsizing and cost reduction as compared to the conventional self-commutation method and forced commutation method, while being capable of cutting off a fault point at a higher speed than the conventional self-commutation method.

In the third embodiment described above, an explanation has been given of an example in which the commutation units are each configured by connecting the commutation reactor to the capacitor in series. However, each of the commutation units can further include the resistor explained in the second embodiment and thus can be configured by connecting the capacitor, the resistor, and the commutation reactor in series. With such a configuration, the attenuation amount of the oscillating current flowing through the commutation units via the first blocking unit after the occurrence of a fault and the current gradient di/dt at a current-zero point can both be further optimized.

Similarly to the first and second embodiments, the third embodiment described above has shown an example in which the first blocking unit is disconnected at a current-zero point in a half-cycle of the oscillating current generated by the commutation units. However, it is obvious that the current-zero point at which the first blocking unit is disconnected is not limited thereto and the first blocking unit can be disconnected at a current-zero point according to the operating time of the first blocking unit.

### Fourth embodiment.

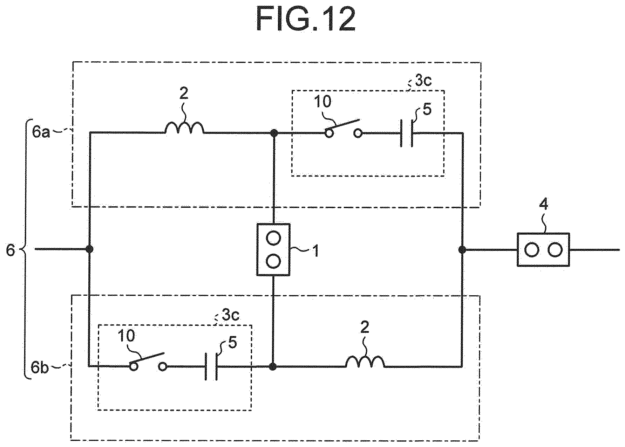

FIG. 12 is a diagram showing a configuration example of a direct-current circuit breaker according to a fourth embodiment. Components identical or equivalent to those according to the first embodiment are designated by like reference signs and detailed explanations thereof will be omitted. Current paths of the direct-current circuit breaker according to the fourth embodiment before and after a DC current is blocked when a fault occurs are the same as those in the first embodiment. Therefore, explanations of the current paths will be omitted.

In the present embodiment, as shown in FIG. 12, commutation units 3c each configured by connecting the capacitor 5 and a switch 10 in series are included instead of the commutation units 3 explained in the first embodiment.

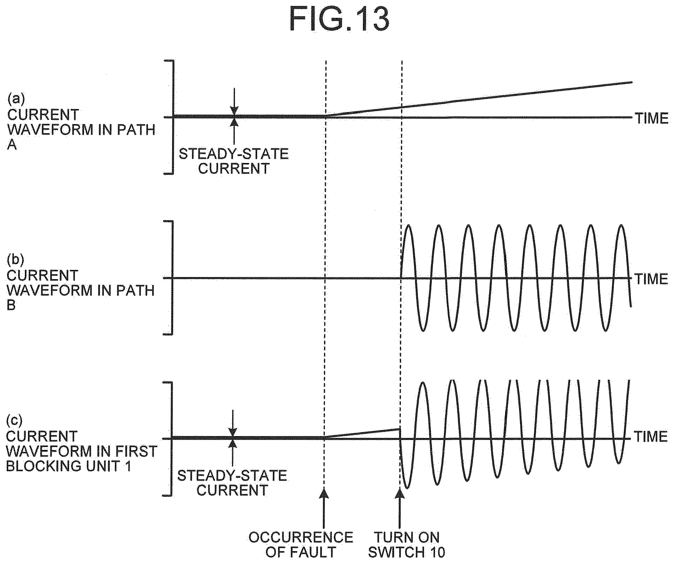

FIG. 13 is a diagram showing current waveforms in the direct-current circuit breaker according to the fourth embodiment when a fault current is not blocked by a first blocking unit. FIG. 13(a) shows a waveform of a current flowing through the path A shown in FIG. 2. FIG. 13(b) shows a waveform of a current flowing through the path B shown in FIG. 2. FIG. 13(c) shows a waveform of a current flowing through the first blocking unit 1.

In the configuration according to the present embodiment, the switches 10 are controlled so as to be opened at a normal time when a steady-state current flows through a DC line, and after a lapse of a predetermined time after the first blocking unit 1 is controlled so as to be opened since the occurrence of a fault, the switches 10 are controlled so as to be closed and turned on. With this configuration, when the switches 10 are turned on, an oscillating current starts flowing through the path B shown in FIG. 2(b), that is, through the commutation units 3c (see FIG. 13(b)).

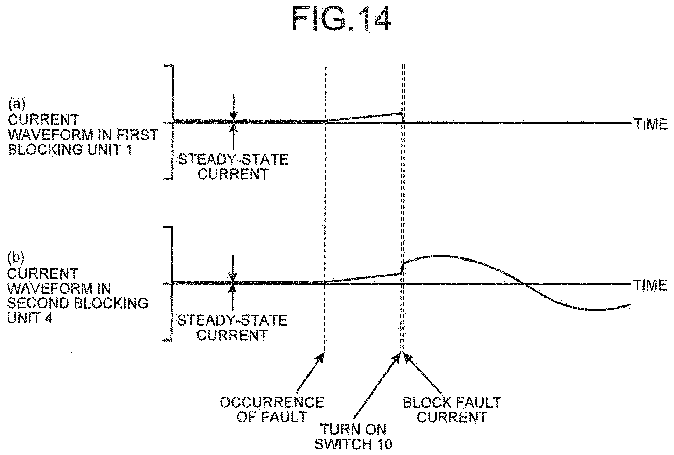

FIG. 14 is a diagram showing current waveforms in the direct-current circuit breaker according to the fourth embodiment when a fault current is blocked by a first blocking unit. FIG. 14(a) shows a waveform of a current flowing through the first blocking unit 1. FIG. 14(b) shows a waveform of a current flowing through the second blocking unit 4.

In the present embodiment, an opening control signal is output from a control circuit (not shown) to the first blocking unit 1 after the occurrence of a fault, and after a lapse of a predetermined time after the first blocking unit 1 is controlled so as to be opened since the occurrence of a fault, the switches 10 are controlled so as to be closed and turned on. By executing such a control, the first blocking unit 1 can be disconnected at the first current-zero point at which an oscillating current starts flowing, and thus the peak value of the current flowing through the first blocking unit 1 can be reduced (see FIG. 14(a)). Thereafter, similarly to the first to third embodiments, the second blocking unit 4 is disconnected at any of the current-zero points generated in the second blocking unit 4 to completely cut off the fault point (see FIG. 14(b)).

As explained above, in the direct-current circuit breaker according to the fourth embodiment, the commutation units are each configured by connecting the switch to the capacitor in series, the switches are controlled so as to be opened at a normal time when a steady-state current flows through a DC line, an opening control signal is output to the first blocking unit after the occurrence of a fault and the switches are controlled so as to be closed and turned on after a lapse of a predetermined time after the first blocking unit is controlled so as to be opened since the occurrence of a fault. Therefore, the first blocking unit can be disconnected at the first current-zero point at which an oscillating current starts flowing, and the peak value of the current flowing through the first blocking unit can be reduced. This makes it easier for the first blocking unit to block the current similarly to the second and third embodiments. In the present embodiment, similarly to the first to third embodiments, by using a semiconductor blocking unit that is formed by using a semiconductor device and is capable of operating at a high speed as the first blocking unit or as both the first blocking unit and the second blocking unit, the direct-current circuit breaker can achieve downsizing and cost reduction as compared to the conventional self-commutation method and forced commutation method, while being capable of cutting off a fault point at a higher speed than the conventional self-commutation method.

In the fourth embodiment described above, an explanation has been given of an example in which the commutation units are each configured by connecting the switch to the capacitor in series. However, it is obvious that each of the commutation units can be configured by further including the resistor explained in the second embodiment, the reactor explained in the third embodiment, or the like.

### Fifth embodiment.

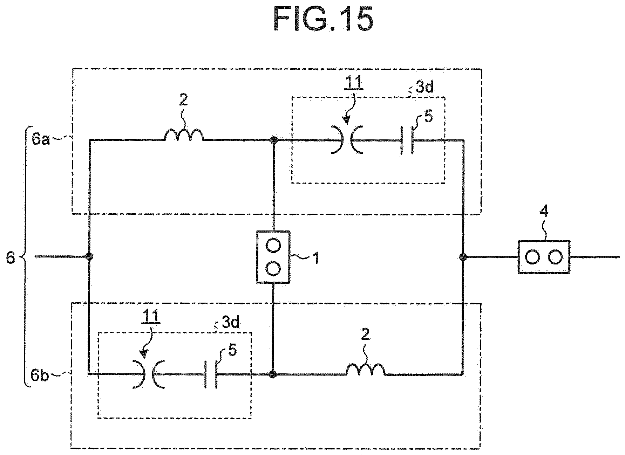

FIG. 15 is a diagram showing a configuration example of a direct-current circuit breaker according to a fifth embodiment. Components identical or equivalent to those according to the fourth embodiment are designated by like reference signs and detailed explanations thereof will be omitted. Current paths of the direct-current circuit breaker according to the fifth embodiment before and after a DC current is blocked when a fault occurs are the same as those in the first embodiment. Therefore, explanations of the current paths will be omitted.

In the present embodiment, as shown in FIG. 15, commutation units 3d are included. The commutation units 3d each include a discharge gap 11 instead of the switch 10 in each of the commutation units 3c explained in the fourth embodiment.

In the configuration according to the present embodiment, similarly to the fourth embodiment, an opening control signal is output from a control circuit (not shown) to the first blocking unit 1 after the occurrence of a fault, and after a lapse of a predetermined time after the first blocking unit 1 is controlled so as to be opened since the occurrence of a fault, the discharge gaps 11 are operated. By executing such a control, the first blocking unit 1 can be disconnected at the first current-zero point at which an oscillating current starts flowing, and thus the peak value of the current flowing through the first blocking unit 1 can be reduced. Thereafter, similarly to the first to fourth embodiments, the second blocking unit 4 is disconnected at any of the current-zero points generated in the second blocking unit 4 to completely cut off the fault point.

As explained above, the direct-current circuit breaker according to the fifth embodiment includes commutation units each including a discharge gap instead of the switch in each commutation unit explained in the fourth embodiment. Even with this configuration, an opening control signal is output to a first blocking unit after the occurrence of a fault similarly to the fourth embodiment, and the discharge gaps are operated after a lapse of a predetermined time after the first blocking unit is controlled so as to be opened since the occurrence of a fault. Therefore, the first blocking unit can be disconnected at the first current-zero point at which an oscillating current starts flowing, and the peak value of the current flowing through the first blocking unit can be reduced. This makes it easier for the first blocking unit to block the current similarly to the second to fourth embodiments. In the present embodiment, similarly to the first to fourth embodiments, by using a semiconductor blocking unit that is formed by using a semiconductor device and is capable of operating at a high speed as the first blocking unit or as both the first blocking unit and the second blocking unit, the direct-current circuit breaker can achieve downsizing and cost reduction as compared to the conventional self-commutation method and forced commutation method, while being capable of cutting off a fault point at a higher speed than the conventional self-commutation method.

In the fifth embodiment described above, an explanation has been given of an example in which the commutation units are each configured by connecting the discharge gap to the capacitor in series. However, similarly to the fourth embodiment, it is obvious that each of the commutation units can be configured by further including the resistor explained in the second embodiment, the reactor explained in the third embodiment, or the like.

### Sixth embodiment.

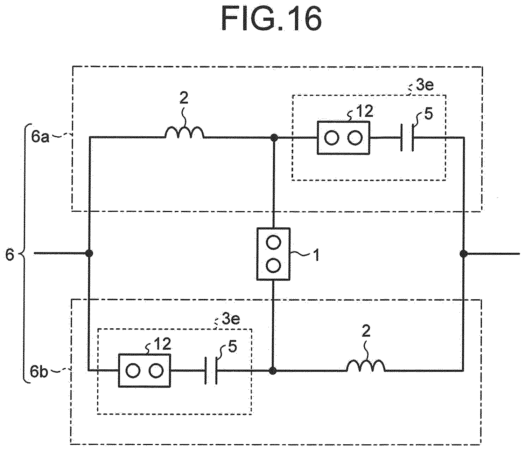

FIG. 16 is a diagram showing a configuration example of a direct-current circuit breaker according to a sixth embodiment. Components identical or equivalent to those according to the first embodiment are designated by like reference signs and detailed explanations thereof will be omitted. Current paths of the direct-current circuit breaker according to the sixth embodiment before and after a DC current is blocked when a fault occurs are the same as those in the first embodiment. Therefore, explanations of the current paths will be omitted.

In the present embodiment, as shown in FIG. 16, commutation units 3e are each configured by connecting a second blocking unit 12 to the capacitor 5 in series instead of the second blocking unit 4 explained in the first embodiment.

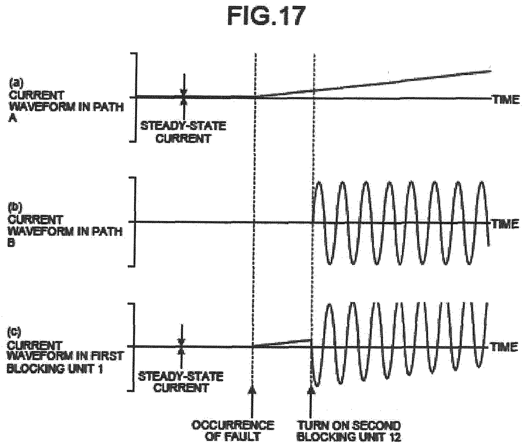

FIG. 17 is a diagram showing current waveforms in the direct-current circuit breaker according to the sixth embodiment when a fault current is not blocked by a first blocking unit. FIG. 17(a) shows a waveform of a current flowing through the path A shown in FIG. 2. FIG. 17(b) shows a waveform of a current flowing through the path B shown in FIG. 2. FIG. 17(c) shows a waveform of a current flowing through the first blocking unit 1.

In the configuration according to the present embodiment, the second blocking units 12 are controlled so as to be in an open state at a normal time when a steady-state current flows through a DC line, and after a lapse of a predetermined time after the first blocking unit 1 is controlled so as to be opened since the occurrence of a fault, the second blocking units 12 are controlled so as to be closed and turned on. With this configuration, when the second blocking units 12 are turned on, an oscillating current starts flowing through the path B shown in FIG. 2(b), that is, through the commutation units 3e (see FIG. 17(b)).

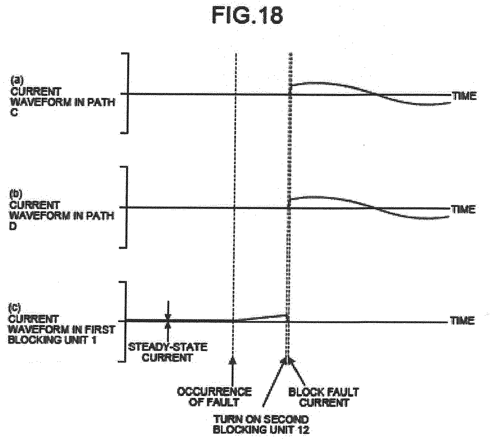

FIG. 18 is a diagram showing current waveforms in the direct-current circuit breaker according to the sixth embodiment when a fault current is blocked by a first blocking unit. FIG. 18(a) shows a waveform of a current flowing through the path C shown in FIG. 2. FIG. 18(b) shows a waveform of a current flowing through the path D shown in FIG. 2. FIG. 18(c) shows a waveform of a current flowing through the first blocking unit 1.

In the present embodiment, an opening control signal is output from a control circuit (not shown) to the first blocking unit 1 after the occurrence of a fault, and after a lapse of a predetermined time after the first blocking unit 1 is controlled so as to be opened since the occurrence of a fault, the second blocking units 12 are controlled so as to be closed and turned on. By executing such a control, the first blocking unit 1 can be disconnected at the first current-zero point at which an oscillating current starts flowing, and thus the peak value of the current flowing through the first blocking unit 1 can be reduced (see FIG. 18(c)).

After a fault current is blocked by the first blocking unit 1, residual currents flow respectively through the path C (the series circuit 6a) and the path D (the series circuit 6b) (both shown in FIG. 2(c)). These residual currents become an oscillating current according to the inductance value of the reactors 2 and the capacitance value of the capacitors 5. Therefore, a plurality of current-zero points are generated (see FIGS. 18(a) and 18(b)). Accordingly, the second blocking units 12 are controlled so as to be opened at any of these current-zero points to completely cut off the fault point.

As explained above, in the direct-current circuit breaker according to the sixth embodiment, the commutation units are each configured by connecting the second blocking unit to the capacitor in series, the second blocking units are controlled so as to be opened at a normal time when a steady-state current flows through a DC line, an opening control signal is output to the first blocking unit after the occurrence of a fault, and the second blocking units are controlled so as to be closed and turned on after a lapse of a predetermined time after the first blocking unit is controlled so as to be opened since the occurrence of a fault. Therefore, the first blocking unit can be disconnected at the first current-zero point at which an oscillating current starts flowing, and the peak value of the current flowing through the first blocking unit can be reduced. This makes it easier for the first blocking unit to block the current. In the present embodiment, by using a semiconductor blocking unit that is formed by using a semiconductor device and is capable of operating at a high speed, the direct-current circuit breaker can achieve downsizing and cost reduction as compared to the conventional self-commutation method and forced commutation method, while being capable of cutting off a fault point at a higher speed than the conventional self-commutation method.

### Seventh embodiment.

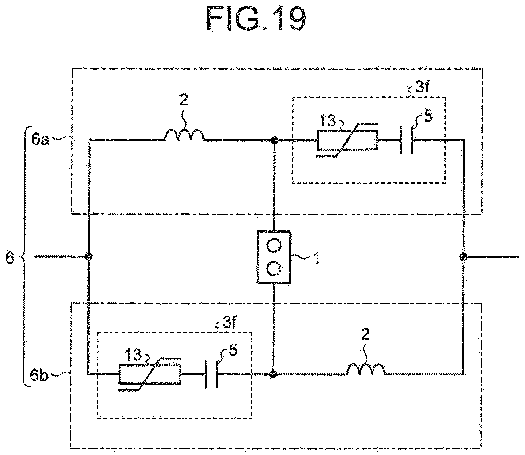

FIG. 19 is a diagram showing a configuration example of a direct-current circuit breaker according to a seventh embodiment. Components identical or equivalent to those according to the sixth embodiment are designated by like reference signs and detailed explanations thereof will be omitted. Current paths of the direct-current circuit breaker according to the seventh embodiment before and after a DC current is blocked when a fault occurs are the same as those in the first embodiment. Therefore, explanations of the current paths will be omitted.

In the present embodiment, as shown in FIG. 19, commutation units 3f are each configured by connecting, to the capacitor 5, a lightning arrester 13 such as a metal oxide arrester (MOA) in series instead of the second blocking unit 12 explained in the sixth embodiment. In the present embodiment, the first blocking unit 1 according to the first to sixth embodiments is referred to as "blocking unit 1".

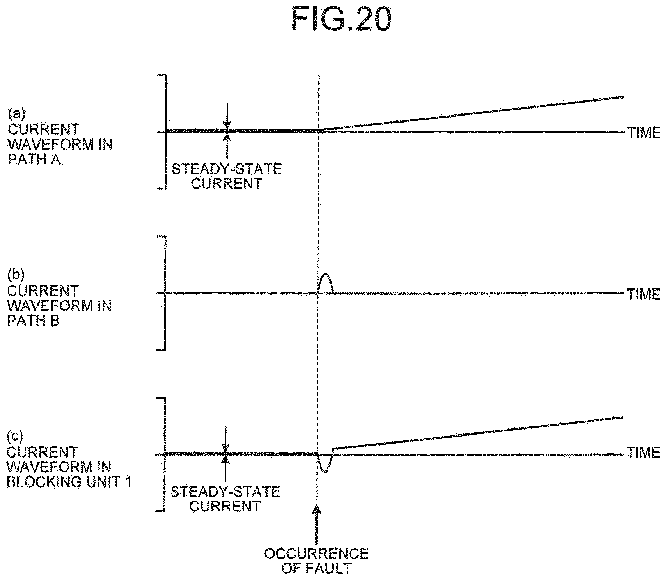

FIG. 20 is a diagram showing current waveforms in the direct-current circuit breaker according to the seventh embodiment when a fault current is not blocked by a blocking unit. FIG. 20(a) shows a waveform of a current flowing through the path A shown in FIG. 2. FIG. 20(b) shows a waveform of a current flowing through the path B shown in FIG. 2. FIG. 20(c) shows a waveform of a current flowing through the blocking unit 1.

According to the configuration of the present embodiment, the voltage across the lightning arrester 13 is equal to or lower than the operating value at a normal time when a steady-state current flows through a DC line, and the commutation units 3f are in an insulated state (see FIG. 2(a)).

For example, when a ground fault occurs at a fault point shown in FIG. 2(b), an overvoltage is generated in the reactors 2. When the voltage across the lightning arrester 13 exceeds the operating value, the lightning arrester 13 operates, and thus an oscillating current flows through the path B according to the capacitance value of the capacitors 5, the wire resistance, and the inductance (see FIG. 2(b)). Therefore, a current-zero point is generated in the blocking unit 1. When the blocking unit 1 is not disconnected, a current flows through the lightning arresters 13 to cancel out the overvoltage in the reactors 2, and therefore the voltage across the lightning arrester 13 becomes equal to or lower than the operating value. Thereafter, a current does not flow through the path B.

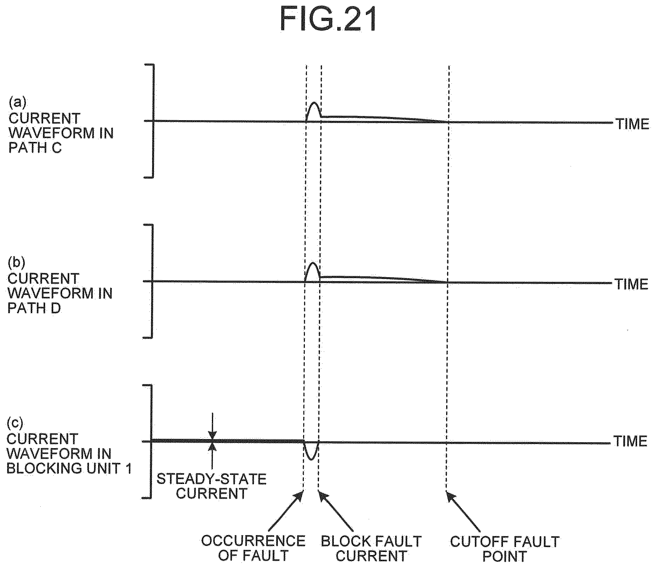

FIG. 21 is a diagram showing current waveforms in the direct-current circuit breaker according to the seventh embodiment when a fault current is blocked by a blocking unit. FIG. 21(a) shows a waveform of a current flowing through the path C shown in FIG. 2. FIG. 21(b) shows a waveform of a current flowing through the path D shown in FIG. 2. FIG. 21(c) shows a waveform of a current flowing through the blocking unit 1.

In the present embodiment, the lightning arrester 13 operates due to an overvoltage generated in the reactor 2 after the occurrence of a fault, and thus an oscillating current flows through the path B. Therefore, a fault current is blocked at a current-zero point generated in the blocking unit 1 (see FIG. 21(c)).

After the fault current is blocked by the blocking unit 1, oscillating currents flow respectively through the path C (the series circuit 6a) and the path D (the series circuit 6b) (both shown in FIG. 2(c)), according to the inductance value of the reactors 2 and the capacitance value of the capacitors 5. At a current-zero point of each of these oscillating currents, the voltage across the lightning arrester 13 becomes equal to or lower than the operating value. This brings the series circuits 6a and 6b into an open state to completely cut off the fault point.

As explained above, in the direct-current circuit breaker according to the seventh embodiment, commutation units are each configured by connecting a lightning arrester to a capacitor in series. Therefore, due to an overvoltage generated in the reactor after the occurrence of a fault, the voltage across the lightning arrester exceeds the operating value, and thus an oscillating current flows through the commutation units. A fault current is blocked at a current-zero point generated in a blocking unit at this point. After the fault current is blocked, the voltage across the lightning arrester becomes equal to or lower than the operating value at the current-zero point of the oscillating current flowing through each series circuit, so as to completely cut off the fault point automatically. In the present embodiment, by using a semiconductor blocking unit that is formed by using a semiconductor device and is capable of operating at a high speed, the direct-current circuit breaker can achieve downsizing and cost reduction as compared to the conventional self-commutation method and forced commutation method, while being capable of cutting off a fault point at a higher speed than the conventional self-commutation method.

In the above embodiments, an explanation has been given of an example in which the semiconductor blocking unit that is formed by using a semiconductor device and is capable of operating at a high speed is used as the first blocking unit (the blocking unit) or as both the first blocking unit and the second blocking unit. However, it is obvious that a mechanical circuit breaker, such as a vacuum circuit breaker, in which the operating time is shorter than that of conventional circuit breakers, can also be used.

The configuration described in the above embodiments is only an example of the configurations of the present invention and can be combined with other techniques as defined in the appended claims.

### Reference Signs List

1 first blocking unit (blocking unit), 2 reactor, 3, 3a, 3b, 3c, 3d, 3e, 3f commutation unit, 4 second blocking unit, 5 capacitor, 6 bridge circuit, 6a, 6b series circuit, 7 resistor, 8 commutation reactor, 10 switch, 11 discharge gap, 12 second blocking unit, 13 lightning arrester.

## Claims

1. (Currently amended) A direct-current circuit breaker that blocks a DC current flowing through a DC line, the direct-current circuit breaker comprising:
a bridge circuit (6) that is configured by connecting two series circuits (6a, 6b) in anti-parallel with each other, each of the series circuits being configured from a reactor (2) and a commutation unit (3, 3a, 3b, 3c, 3d) that includes a capacitor (5);
a first blocking unit (1) that is connected between connection points, each of which is between the reactor and the commutation unit in each of the series circuits, that is in a closed state at a normal time when a steady-state current flows through the DC line, that is controlled so as to be opened after occurrence of a fault in the DC line, and that is disconnected at a current-zero point at which a current flowing through the reactors and a current flowing through the commutation units cancel each other out; and
a second blocking unit (4) that is connected to the bridge circuit in series, that is in a closed state at the normal time, that is controlled so as to be opened after the first blocking unit is disconnected, and that is disconnected at a current-zero point at which currents flowing respectively through the series circuits cancel each other out.

2. (Currently amended) The direct-current circuit breaker according to claim 1, wherein the commutation unit (3a) is configured by connecting a resistor (7) to the capacitor (5) in series.

3. (Currently amended) The direct-current circuit breaker according to claim 1, wherein the commutation unit (3b) is configured by connecting a commutation reactor (8) to the capacitor (5) in series.

4. (Currently amended) The direct-current circuit breaker according to claim 1, wherein the commutation unit (3c) is configured by connecting a switch (10) to the capacitor (5) in series, where the switch is turned on after a lapse of a predetermined time after the first blocking unit (1) is controlled so as to be opened since occurrence of a fault in the DC line.

5. (Currently amended) The direct-current circuit breaker according to claim 1, wherein the commutation unit (3d) is configured by connecting a discharge gap (11) to the capacitor (5) in series, where the discharge gap is operated after a lapse of a predetermined time after the first blocking unit (1) is controlled so as to be opened since occurrence of a fault in the DC line.

6. (Currently amended) The direct-current circuit breaker according to claim 1, wherein the first blocking unit (1) is configured by using a semiconductor unit.

7. (Currently amended) The direct-current circuit breaker according to claim 6, wherein the second blocking unit (4) is configured by using a semiconductor unit.

8. (Currently amended) A direct-current circuit breaker that blocks a DC current flowing through a DC line, the direct-current circuit breaker comprising:
a bridge circuit (6) that is configured by connecting two series circuits (6a, 6b) in anti-parallel with each other, each of the series circuits being configured from a reactor (2) and a commutation unit (3e) that includes a capacitor (5);
a first blocking unit (1) that is connected between connection points, each of which is between the reactor and the commutation unit in each of the series circuits, that is in a closed state at a normal time when a steady-state current flows through the DC line, that is controlled so as to be opened after occurrence of a fault in the DC line, and that is disconnected at a current-zero point at which a current flowing through the reactors and a current flowing through the commutation units cancel each other out; and
a second blocking unit (12) that is connected to the capacitor in series, that is in an open state at the normal time, that is controlled so as to be closed after a lapse of a predetermined time after the first blocking unit is controlled so as to be opened since the occurrence of a fault, that is controlled so as to be opened after the first blocking unit is disconnected, and that is disconnected at a current-zero point of a current flowing through each of the series circuits.

9. (Currently amended) The direct-current circuit breaker according to claim 8, wherein the first blocking unit (1) is configured by using a semiconductor unit.

10. (Currently amended) The direct-current circuit breaker according to claim 9, wherein the second blocking unit (12) is configured by using a semiconductor unit.

11. (Currently amended) A direct-current circuit breaker that blocks a DC current flowing through a DC line, the direct-current circuit breaker comprising:
a bridge circuit (6) that is configured by connecting two series circuits (6a, 6b) in anti-parallel with each other, each of the series circuits being configured from a reactor (2) and a commutation unit (3f) that includes a capacitor (5);
a blocking unit (1) that is connected between connection points, each of which is between the reactor and the commutation unit in each of the series circuits, that is in a closed state at a normal time when a steady-state current flows through the DC line, that is controlled so as to be opened after occurrence of a fault in the DC line, and that is disconnected at a current-zero point at which a current flowing through the reactors and a current flowing through the commutation units cancel each other out; and
a lighting arrester (13) that is connected to the capacitor in series, that operates when a fault occurs in the DC line, and that enters an open state at a current-zero point of a current flowing through each of the series circuits after the first blocking unit is disconnected.

12. (Currently amended) The direct-current circuit breaker according to claim 11, wherein the blocking unit (1) is configured by using a semiconductor unit.

## Patentansprüche

1. Gleichstrom-Schutzschalter, der einen durch eine Gleichstromleitung fließenden Gleichstrom blockiert, wobei der Gleichstrom-Schutzschalter aufweist:
eine Brückenschaltung (6), die derart konfiguriert ist, dass zwei Reihenschaltungen (6a, 6b) miteinander antiparallel geschaltet sind, wobei jede der Reihenschaltungen aus einer Drosselspule (2) und einer Kommutierungseinheit (3, 3a, 3b, 3c, 3d) aufgebaut ist, die einen Kondensator (5) enthält;
eine erste Blockiereinheit (1), die zwischen Verbindungspunkten angeschlossen ist, wovon sich jeder zwischen der Drosselspule und der Kommutierungseinheit in jeder der Reihenschaltungen befindet, die in einer normalen Zeit in einem geschlossenen Zustand ist, wenn ein Beharrungszustandsstrom durch die Gleichstromleitung fließt, die so gesteuert ist, dass sie nach einem Auftreten eines Fehlers in der Gleichstromleitung geöffnet wird, und die zu einem Stromnullpunkt abgeschaltet wird, bei dem ein durch die Drosselspulen fließender Strom und ein durch die Kommutierungseinheiten fließender Strom einander aufheben; und
eine zweite Blockiereinheit (4), die in Reihe an die Brückenschaltung angeschlossen ist, die in der normalen Zeit in einem geschlossenen Zustand ist, die so gesteuert ist, dass sie geöffnet wird, nachdem die erste Blockiereinheit abgeschaltet wurde, und die zu einem Stromnullpunkt abgeschaltet wird, bei dem Ströme, die jeweils durch die Reihenschaltungen fließen, einander aufheben.

2. Gleichstrom-Schutzschalter nach Anspruch 1, wobei die Kommutierungseinheit (3a) derart konfiguriert ist, dass ein Widerstand (7) in Reihe an den Kondensator (5) angeschlossen ist.

3. Gleichstrom-Schutzschalter nach Anspruch 1, wobei die Kommutierungseinheit (3b) derart konfiguriert ist, dass eine Kommutierungsdrosselspule (8) in Reihe an den Kondensator (5) angeschlossen ist.

4. Gleichstrom-Schutzschalter nach Anspruch 1, wobei die Kommutierungseinheit (3c) derart konfiguriert ist, dass ein Schalter (10) in Reihe an den Kondensator (5) angeschlossen ist, wobei der Schalter nach einem Verstreichen einer vorbestimmten Zeit, nachdem die erste Blockiereinheit (1) so gesteuert wurde, dass sie seit einem Auftreten eines Fehlers in der Gleichstromleitung geöffnet wird, eingeschaltet wird.

5. Gleichstrom-Schutzschalter nach Anspruch 1, wobei die Kommutierungseinheit (3d) derart konfiguriert ist, dass ein Entladungsspalt (11) in Reihe an den Kondensator (5) angeschlossen ist, wobei der Entladungsspalt nach einem Verstreichen einer vorbestimmten Zeit, nachdem die erste Blockiereinheit (1) so gesteuert wurde, dass sie seit einem Auftreten eines Fehlers in der Gleichstromleitung geöffnet wird, betätigt wird.

6. Gleichstrom-Schutzschalter nach Anspruch 1, wobei die erste Blockiereinheit (1) unter Verwendung einer Halbleitereinheit konfiguriert ist.

7. Gleichstrom-Schutzschalter nach Anspruch 6, wobei die zweite Blockiereinheit (4) unter Verwendung einer Halbleitereinheit konfiguriert ist.

8. Gleichstrom-Schutzschalter, der einen durch eine Gleichstromleitung fließenden Gleichstrom blockiert, wobei der Gleichstrom-Schutzschalter aufweist:
eine Brückenschaltung (6), die derart konfiguriertist, dass zwei Reihenschaltungen (6a, 6b) miteinander antiparallel geschaltet sind, wobei jede der Reihenschaltungen aus einer Drosselspule (2) und einer Kommutierungseinheit (3e) aufgebaut ist, die einen Kondensator (5) enthält;
eine erste Blockiereinheit (1), die zwischen Verbindungspunkten angeschlossen ist, wovon sich jeder zwischen der Drosselspule und der Kommutierungseinheit in jeder der Reihenschaltungen befindet, die in einer normalen Zeit in einem geschlossenen Zustand ist, wenn ein Beharrungszustandsstrom durch die Gleichstromleitung fließt, die so gesteuert ist, dass sie nach einem Auftreten eines Fehlers in der Gleichstromleitung geöffnet wird, und die zu einem Stromnullpunkt abgeschaltet wird, bei dem ein durch die Drosselspulen fließender Strom und ein durch die Kommutierungseinheiten fließender Strom einander aufheben; und
eine zweite Blockiereinheit (12), die in Reihe an den Kondensator angeschlossen ist, die in der normalen Zeit in einem offenen Zustand ist, die so gesteuert ist, dass sie nach einem Verstreichen einer vorbestimmten Zeit geschlossen ist, nachdem die erste Blockiereinheit so gesteuert wurde, dass sie seit des Auftretens eines Fehlers geöffnet ist, die so gesteuert ist, dass sie geöffnet wird, nachdem die erste Blockiereinheit abgeschaltet wurde, und die bei einem Stromnullpunkt eines durch jede der Reihenschaltungen fließenden Stroms abgeschaltet wird.

9. Gleichstrom-Schutzschalter nach Anspruch 8, wobei die erste Blockiereinheit (1) unter Verwendung einer Halbleitereinheit konfiguriert ist.

10. Gleichstrom-Schutzschalter nach Anspruch 9, wobei die zweite Blockiereinheit (12) unter Verwendung einer Halbleitereinheit konfiguriert ist.

11. Gleichstrom-Schutzschalter, der einen durch eine Gleichstromleitung fließenden Gleichstrom blockiert, wobei der Gleichstrom-Schutzschalter aufweist:
eine Brückenschaltung (6), die derart konfiguriert ist, dass zwei Reihenschaltungen (6a, 6b) miteinander antiparallel geschaltet sind, wobei jede der Reihenschaltungen aus einer Drosselspule (2) und einer Kommutierungseinheit (3f) aufgebaut ist, die einen Kondensator (5) enthält;
eine erste Blockiereinheit (1), die zwischen Verbindungspunkten angeschlossen ist, wovon sich jeder zwischen der Drosselspule und der Kommutierungseinheit in jeder der Reihenschaltungen befindet, die in einer normalen Zeit in einem geschlossenen Zustand ist, wenn ein Beharrungszustandsstrom durch die Gleichstromleitung fließt, die so gesteuert ist, dass sie nach einem Auftreten eines Fehlers in der Gleichstromleitung geöffnet wird, und die zu einem Stromnullpunkt abgeschaltet wird, bei dem ein durch die Drosselspulen fließender Strom und ein durch die Kornmutierungseinheiten fließender Strom einander aufheben; und
eine Blitzschutzvorrichtung (13), die in Reihe an den Kondensator angeschlossen ist, die arbeitet, wenn ein Fehler in der Gleichstromleitung auftritt, und die bei einem Stromnullpunkt eines durch jede der Reihenschaltungen fließenden Stroms, nachdem die erste Blockiereinheit abgeschaltet wurde, in einen offenen Zustand eintritt.

12. Gleichstrom-Schutzschalter nach Anspruch 11, wobei die Blockiereinheit (1) unter Verwendung einer Halbleitereinheit konfiguriert ist.

## Revendications

1. Disjoncteur de courant continu qui bloque un courant continu passant par une ligne de courant continu, le disjoncteur de courant continu comprenant :
un circuit à pont (6) qui est configuré par connexion de deux circuits en série (6a, 6b) de façon antiparallèle l'un à l'autre, chacun des circuits en série étant configuré à partir d'un réacteur (2) et d'une unité de commutation (3, 3a, 3b, 3c, 3d) qui inclut un condensateur (5) ;
une première unité de blocage (1) qui est connectée entre des points de connexion dont chacun est situé entre le réacteur et l'unité de commutation dans chacun des circuits en série, qui est dans un état fermé en temps normal lorsqu'un courant permanent passe par la ligne de courant continu, qui est commandée de manière à être ouverte après survenance d'un défaut dans la ligne de courant continu, et qui est déconnectée à un point zéro de courant auquel un courant passant par les réacteurs et un courant passant par les unités de commutation s'annulent l'un l'autre ; et
une deuxième unité de blocage (4) qui est connectée en série au circuit à pont, qui est dans un état fermé en temps normal, qui est commandée de manière à être ouverte après que la première unité de blocage est déconnectée, et qui est déconnectée à un point zéro de courant auquel des courants passant respectivement par les circuits en série s'annulent l'un l'autre.

2. Le disjoncteur de courant continu selon la revendication 1, sachant que l'unité de commutation (3a) est configurée par connexion en série d'une résistance (7) au condensateur (5).

3. Le disjoncteur de courant continu selon la revendication 1, sachant que l'unité de commutation (3b) est configurée par connexion en série d'un réacteur de commutation (8) au condensateur (5).

4. Le disjoncteur de courant continu selon la revendication 1, sachant que l'unité de commutation (3c) est configurée par connexion en série d'un commutateur (10) au condensateur (5), le commutateur étant enclenché après un laps de temps prédéterminé après que la première unité de blocage (1) est commandée de manière à être ouverte depuis la survenance d'un défaut dans la ligne de courant continu.

5. Le disjoncteur de courant continu selon la revendication 1, sachant que l'unité de commutation (3d) est configurée par connexion en série d'un entrefer de décharge (11) au condensateur, l'entrefer de décharge fonctionnant après un laps de temps prédéterminé après que la première unité de blocage (1) est commandée de manière à être ouverte depuis la survenance d'un défaut dans la ligne de courant continu.

6. Le disjoncteur de courant continu selon la revendication 1, sachant que la première unité de blocage (1) est configurée au moyen d'une unité semiconductrice.

7. Le disjoncteur de courant continu selon la revendication 6, sachant que la deuxième unité de blocage (4) est configurée au moyen d'une unité semiconductrice.

8. Disjoncteur de courant continu qui bloque un courant continu passant par une ligne de courant continu, le disjoncteur de courant continu comprenant :
un circuit à pont (6) qui est configuré par connexion de deux circuits en série (6a, 6b) de façon antiparallèle l'un à l'autre, chacun des circuits en série étant configuré à partir d'un réacteur (2) et d'une unité de commutation (3e) qui inclut un condensateur (5) ;
une première unité de blocage (1) qui est connectée entre des points de connexion dont chacun est situé entre le réacteur et l'unité de commutation dans chacun des circuits en série, qui est dans un état fermé en temps normal lorsqu'un courant permanent passe par la ligne de courant continu, qui est commandée de manière à être ouverte après survenance d'un défaut dans la ligne de courant continu, et qui est déconnectée à un point zéro de courant auquel un courant passant par les réacteurs et un courant passant par les unités de commutation s'annulent l'un l'autre ; et
une deuxième unité de blocage (12) qui est connectée au condensateur en série, qui est dans un état ouvert en temps normal, qui est régulée de manière à être fermée après un laps de temps prédéterminé après que la première unité de blocage est commandée de manière à être ouverte depuis la survenance d'un défaut, qui est commandée de manière à être ouverte après que la première unité de blocage est déconnectée, et qui est déconnectée à un point zéro de courant d'un courant passant par chacun des circuits en série.

9. Le disjoncteur de courant continu selon la revendication 8, sachant que la première unité de blocage (1) est configurée au moyen d'une unité semiconductrice.

10. Le disjoncteur de courant continu selon la revendication 9, sachant que la deuxième unité de blocage (12) est configurée au moyen d'une unité semiconductrice.

11. Disjoncteur de courant continu qui bloque un courant continu passant par une ligne de courant continu, le disjoncteur de courant continu comprenant :
un circuit à pont (6) qui est configuré par connexion de deux circuits en série (6a, 6b) de façon antiparallèle l'un avec l'autre, chacun des circuits en série étant configuré à partir d'un réacteur (2) et d'une unité de commutation (3f) qui inclut un condensateur (5) ;
une unité de blocage (1) qui est connectée entre des points de connexion dont chacun est situé entre le réacteur et l'unité de commutation dans chacun des circuits en série, qui est dans un état fermé en temps normal lorsqu'un courant permanent passe par la ligne de courant continu, qui est commandée de manière à être ouverte après survenance d'un défaut dans la ligne de courant continu, et qui est déconnectée à un point zéro de courant auquel un courant passant par les réacteurs et un courant passant par les unités de commutation s'annulent l'un l'autre ; et
un parafoudre (13) qui est connecté en série au condensateur, qui fonctionne lorsqu'un défaut survient dans la ligne de courant continu, et qui se met dans un état ouvert à un point zéro de courant d'un courant passant par chacun des circuits en série après que la première unité de blocage est déconnectée.

12. Le disjoncteur de courant continu selon la revendication 11, sachant que l'unité de blocage (1) est configurée au moyen d'une unité semiconductrice.
